# EUROPÄISCHE PATENTSCHRIFT

(11) **EP 0 455 764 B1**
(45) Veröffentlichungstag und Bekanntmachung des Hinweises auf die Patenterteilung: **22.12.1993**
(21) Anmeldenummer: 90915401.5
(22) Anmeldetag: 26.10.1990
(51) Int. Cl.: F16L 55/16, F16L 55/18

(54) **FERNGESTEUERTER SCHALUNGSEINBAU IN NICHT BEGEHBAREN ROHRVERZWEIGUNGEN UND EINMÜNDUNGEN**
REMOTELY CONTROLLED INSTALLATION OF LININGS IN INACCESSIBLE SEWER-PIPE JUNCTIONS AND DISCHARGE ENTRIES
MISE EN PLACE TELECOMMANDEE DE COFFRAGES DANS DES TUBES AVEC BIFURCATIONS ET EMBOUCHURES INACCESSIBLES

(30) Priorität: 01.12.1989 CH 4312/89
(43) Veröffentlichungstag der Anmeldung: 13.11.1991
(73) Patentinhaber: Sika Robotics AG, CH-8627 Grüningen (CH)
(72) Erfinder: SIGEL, Alwin, CH-8418 Schlatt (CH)
(74) Vertreter: Schwabe, Hans-Georg, Dipl.-Ing.
(86) Internationale Anmeldenummer: CH9000252
(87) Internationale Veröffentlichungsnummer: WO9108417

(56) Entgegenhaltungen:
- EP-A- 0 024 157
- WO-A-89/08218
- WO-A-90/05874
- GB-A- 2 147 682

## Beschreibung

Die Erfindung betrifft ein Verfahren zum ferngesteuerten Sanieren einer beschädigten Stelle an einer Einmündung von Rohverzweigungen an einer Hauptleitung sowie eine Vorrichtung für den ferngesteuerten Schalungseinbau in einer Rohrverzweigung.

Bei Rohrverzweigungen und Einmündungen, zum Beispiel von Neben- in Hauptleitungen, häufen sich vor allem bei Abwasserleitungen Beschädigungen der Stoßstellen. Das wird hauptsächlich durch korrosive beziehungsweise erosive Bestandteile der Abwässer verursacht. Die so beschädigten Stoßstellen stellen eine grosse Gefahr für das Grundwasser und somit für das Trinkwasser ganzer Regionen dar, können doch auf diese Weise unkontrolliert grosse Mengen gefährlicher Abwässer ins Erdreich einsickern. Aus diesem Grund sind festgestellte Risse oder Beschädigungen bei Rohrverzweigungen und Einmündungen so schnell wie möglich zu beheben.

Mit einfachen Mitteln sind Sanierungen von Rohrverzweigungen und Einmündungen nicht durchführbar, vor allem wenn die Leitungen so kleine Durchmesser aufweisen, dass sie nicht begehbar sind. Es blieb bisher nichts anderes übrig, als die schadhafte Stelle durch Aushub freizulegen und die beschädigten Rohrelemente zu ersetzen. Es besteht zwar die Möglichkeit, die schadhaften Stellen mit einem besonderen Abdichtungsgel auszuspritzen. Dieses Gel neigt aber zu Versprödung und somit zu Durchlässigkeit durch Haarrissbildung, sobald der Grundwasserspiegel, zum Beispiel saisonal bedingt, absinkt; diese Lösung ist also nicht empfehlenswert.

Der neue ferngesteuerte Schalungseinbau in nicht begehbaren Rohrverzweigungen und Einmündungen ist von einem ähnlichen Sanierungsverfahren für Rohre abgeleitet, das vom selben Erfinder bereits patentiert worden ist WO-A-89/03003 und erfolgreich eingesetzt wird. Auch für das vorliegende Patent wird von Vorteil eine ferngesteuerte Rohr-Sanierungsmaschine verwendet, die ebenfalls vom selben Erfinder patientert worden ist und sich täglich im harten Einsatz bewährt (WO-A-88/07645).

Aus der älteren Patentanmeldung WO 90/05874 (Stand der Technik gemäß Artikel 54(3)EPÜ) ist ein Verfahren zum Reparieren einer nicht begehbaren, abwasserführenden Hauszuleitung in demjenigen Abschnitt, mit welchem die Hauszuleitung in eine ebenfalls nicht begehbare Hauptleitung einmündet, bekannt. Bei diesem bekannten Verfahren wird eine ferngesteuerte Vorrichtung von der Hauptleitung aus an den zu reparierenden Abschnitt gebracht. Ein noch leerer, aufblasbarer Körper wird über eine um die Längsachse der Hauptleitung schwenkbare und radial zu ihr ausfahrbare Druckluftzuführung in die Hauszuleitung eingefahren und anschließend aufgeblasen. Der aufgeblasene Körper wird in der Hauszuleitung zurückgelassen, ein Schild wird an den Einmündungsbereich der Hauszuleitung innerhalb der Hauptzuleitung an diese angepreßt und der sich ergebende Hohlraum wird mit einer aushärtenden Masse ausgefüllt. Später muß die Verbindung zwischen der Hauptleitung und der Hauszuleitung wieder hergestellt werden, wobei genau darauf geachtet werden muß, daß die auszuführende Fräsung auf der Mittelachse der Hauszuleitung angelegt wird, damit keine Schwachstellen entstehen, was jedoch in der Praxis nicht mit der erforderlichen Präzision möglich ist. Auch kann ein an die Wandung der Hauptleitung anpreßbarer Schild mit anschließender, aufblasbarer Manschette zum Einsatz gelangen.

Aus der EP-A-0 024 157 ist ein Verfahren zum Einsetzen einer neuen Wandung in eine Leitung bekannt. Dabei wird die neue Wandung in einem eingerollten Zustand in die schadhafte Leitung eingeführt und an der zu reparierenden Stelle an die zu reparierende Leitung angelegt. In den gesamten Bereich zwischen der angelegten neuen Wandung und der Leitung wird eine aushärtende Masse eingebracht, nachdem die Übergangsstellen zwischen der angelegten neuen Wandung und dem abzudichtenden Rohr mit Manschetten provisorisch abgedichtet worden sind. Diese Verfahrensweise eignet sich nicht zum Abdichten von Rohrverzweigungen bzw. Einmündungen, sondern lediglich zum Abdichten von Schadstellen in durchgehenden Leitungen.

Aus der GB-A-2 147 682 ist eine Vorrichtung bekannt, mit der ein aufblasbarer Körper in eine Rohrverzweigung eingebracht werden kann. Der aufblasbare Körper enthält ein radioaktives Material, das eine spätere Ortung des eingebrachten Körpers und damit auch der Rohrverzweigung zulassen soll. Die Hauptleitung, in die die Rohrverzweigung einmündet, wird mit einem Rohrabschnitt kleineren Durchmessers als die Hauptleitung ausgestattet und Freiräume zwischen dem Rohrabschnitt und der Hauptleitung werden mit einer aushärtenden Masse ausgefüllt. Später wird die bekannte Vorrichtung über die Hauptleitung in dem Rohrabschnitt eingeführt. Dort ortet die bekannte Vorrichtung die in dem aufgeblasenen Körper enthaltene radioaktive Probe und bohrt an der zugehörigen Stelle eine Verbindungsleitung durch den Rohrabschnitt und das ausgehärtete Material, um die Hauszuleitung wiederum an die Hauptleitung anzuschließen. Dieses Verfahren ist äußerste aufwendung und zudem relativ unsicher, da die Bohrung häufig nicht exakt in die anzuschließenden Hauszuleitung hinein angelegt wird und somit gleichzeitig wiederum Undichtigkeiten entstehen können.

Es ist die Aufgabe der vorliegenden Erfindung, eine Vorrichtung sowie ein Verfahren vorzuschlagen, mit dem in nicht begehbaren Rohrleitungen Einmündungen von Rohrverzweigungen auf einfache und verbesserte Weise wiederhergestellt werden können.

Eine Vorrichtung bzw. ein Verfahren, mit die der vorliegenden Erfindung zugrundeliegende Aufgabe gelöst werden kann, wird durch die bzw. das in den Patentansprüchen 1 bzw. 12 definierte Vorrichtung bzw. Verfahren gelöst.

Nachfolgend wird die vorliegende Erfindung unter Bezugnahme auf eine bevorzugte Ausführungsform anhand der beiliegenden Züchnungen näher beschrieben. Es zeigen:
- Fig. 1: Schalung
- Fig. 2: Einbringen der Schalung
- Fig. 3: Erste Stufe der Sanierung
- Fig. 4: Zweite Stufe der Sanierung

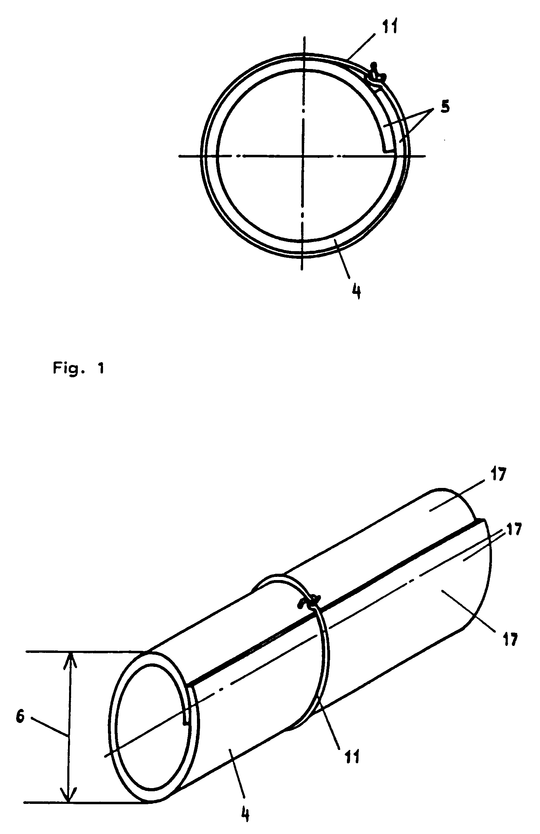

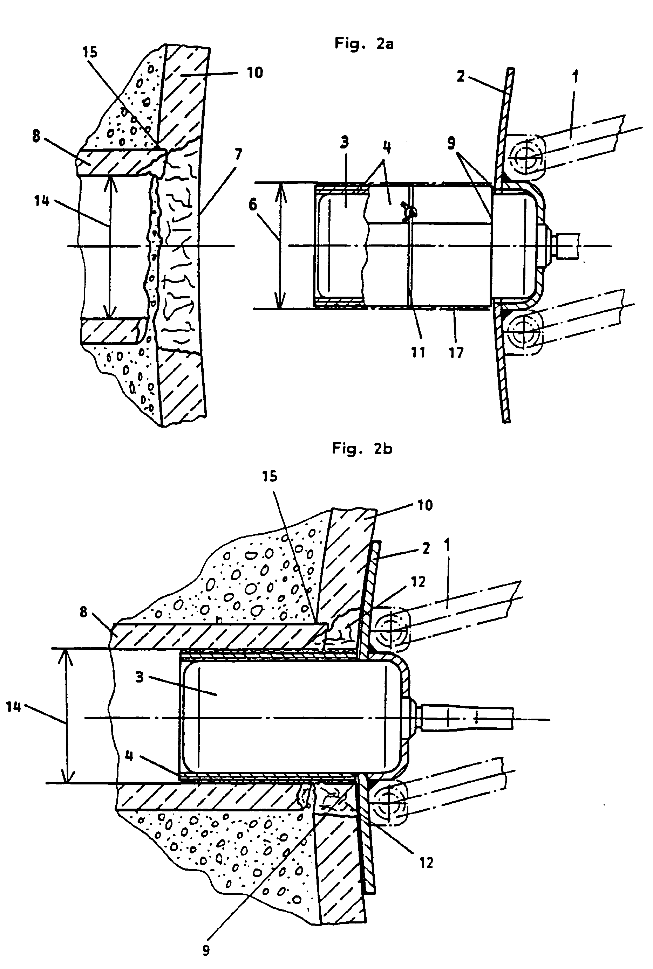

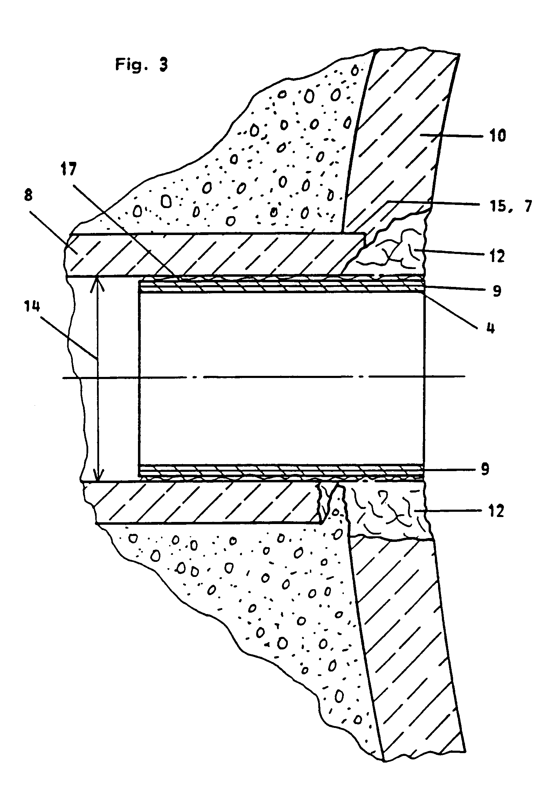

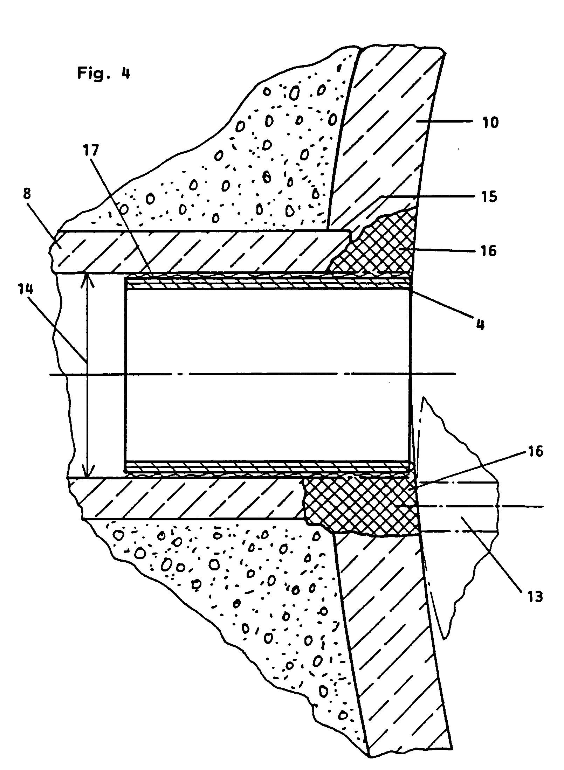

Das Applikationsgerät 1 (Fig. 2) besteht hauptsächlich aus einem gekrümmten Schild 2 und einem aus diesem herausragenden rohrförmigen sogenannten Ballon 3, der im Wesentlichen einem aufblasbaren Gummischlauch entspricht. Ueber den Ballon 3 wird nun die Schalung 4 (Fig. 1) gestülpt. Diese Schalung ist längs geschlitzt und so zusammengedrückt, dass sich die Wände 5 überlappen. So lässt sich ein Durchmesser 6 erzielen, der kleiner ist als der Innendurchmesser 14 der zu sanierenden Einmündung 7 der Nebenleitung E (oder der nicht gezeigten Rohrverzweigung). Dadurch ist es möglich, die Verschalung 4 dank dem herausfahrbaren Ballon 3 in die Nebenleitung 8 einzubringen, wie dies in Figur 2 gezeigt ist. Figur 2a zeigt das Applikationsgerät 1 mit eingefahrenem Ballon 3 während der Annäherung an die Schadstelle durch die nicht begehbare Hauptleitung 10, die wie erwähnt mit einer Sanierungsmaschine erfolgt und Figur 2b zeigt das Applikationsgerät 1 mit in die Nebenleitung 8 ausgefahrenem Ballon 3. Aus Figur 2 ist auch ersichtlich, dass die Schalung 4 so weit in die Nebenleitung 8 gesteckt wird, bis die Kante 9 bündig mit dem an die Hauptleitung 10 angepressten Schild 2 abschliesst. So ist gewährleistet, dass zum einen die Schalung nicht zu weit in die Nebenleitung 8 eingeschoben wird und dass sie zum anderen nach erfolgter Sanierung nicht in die Hauptleitung 10 hineinragt und deren nutzbaren Durchmesser vermindert. Eine exakte Positionierung erlaubt verständlicherweise auch eine saubere, qualitativ einwandfreie Sanierung der beschädigten Stoßstelle 15.
Das Applikationsgerät 1 ist übrigens eine austauschbare Komponente der Rohr-Sanierungsmaschine, die wie erwähnt vom selben Erfinder bereits patentiert worden ist. Dadurch ist es ohne Schwierigkeiten möglich, die Druckluft zum Aufpumpen des Ballons 3 zuzuführen und die Einbringung der Schalung mittels auf der Rohr-Sanierungsmaschine aufgebauten Videokamera von aussen zu steuern und zu beobachten.
Ist die Schalung 4 exakt positioniert, wird der Ballon 3 mit Druckluft aufgepumpt. Der in der Folge auf die Verschalung wirkende Druck lässt einen Draht 11 (oder mehrere Drähte 11) reissen, welcher die geschlitzte Schalung auf den Durchmesser 6 zusammengedrückt hielt. Die so vorgefederte Schalung dehnt sich anschliessend schlagartig aus und presst sich an die noch unbeschädigten Innenwände der Nebenleitung 8. Unterstützt wird die Ausdehnung der Schalung und deren Anpressen an die Innenwände der Nebenleitung 8 durch den gleichzeitig noch etwas ansteigenden Druck im Ballon 3. Die Schalung 4 wird nun in dieser Position gehalten, weil diese vor dem Einfahren in die Kanalisation mit Klebstoff 17 (z. B. Epoxidharz oder sonst geeignetem Zweikomponentenkleber) rundum bestrichen worden ist. Die Klebestellen werden durch Reinigung und mechanische Oberflächenbearbeitung von Bakterien und ungesundem Material befreit. Um eine Trocknung der Klebestellen zu umgehen, wird vorwiegend mit nasshaftenden Klebern gearbeitet. Nachdem die Schalung eingebracht und positioniert ist, kann die Druckluft aus dem Ballon 3 abgelassen werden; das Applikationsgerät wird aus der Schalung ausgefahren. Die erste Stufe der Sanierung ist abgeschlossen (Fig. 3).
Die zweite Stufe der Sanierung (Fig. 4) besteht darin, den Zwischenraum 12 zwischen der Schalung 4 und der beschädigten Stoßstelle 15 mit Dichtungsmasse 16 auszuspritzen. Dabei gelangt eine Hochdruck-Spritzdüse 13 (Fig. 4) zum Einsatz, die entweder in das Applikationsgerät 1 integriert ist oder als Komponente der bereits erwähnten Rohr-Sanierungsmaschine an diese angebaut ist.
Ist die schadhafte Stelle rundum abgedichtet, müssen mit der Rohr-Sanierungsmaschine nur noch routinemässige Nachbesserungsarbeiten ausgeführt werden (Schleifen etc.). Die Schalung 4 bleibt als verlorene Schalung zurück. Sie kannn aus unverrottbarem und chemisch beständigem Material hergestellt sein. Dazu gehören Edelstähle oder für Abwasserleitungen besonders geeignete Kunststoffe. Es ist aber auch denkbar, verrottbares Material zu verwenden: Da die Schalung nach der Sanierung ihren Zweck erfüllt hat und die Dichtungsmasse ausgehärtet ist, schadet es ja nicht, wenn zum Beispiel nach einem Jahr von der Sanierung nichts mehr zu sehen ist. Ein Vertreter dieser verrottbaren Werkstoffe sind die sich in Entwicklung befindlichen biologisch abbaubaren Kunststoffe, es gibt aber bestimmt noch weitere geeignete Werkstoffe.
Die Schalung 4 kann übrigens je nach Bedarf verschieden lang sein und aus längs geschlitzten Rohren oder vorgebogenen Platten hergestellt werden. Es muss lediglich darauf geachtet werden, dass die Federkonstante des Materials gross genug ist, damit nach dem Reissen des Drahtes 11 sich die Verschalung 4 auch gut ausdehnt.

Der neue ferngesteuerte Schalungseinbau für nicht begehbare Rohrverzweigungen und Einmündungen erlaubt eine preisgünstige und gleichzeitig effiziente Sanierung von beschädigten Stoßstellen, da diese nicht durch Aushub freigelegt werden müssen. Die Zuverlässigkeit ist dadurch gewährleistet, dass bewährte Rohr-Sanierungsmaschinen samt deren (austauschbaren) Komponenten und neuentwickelte Abdichtungsmassen zum Einsatz gelangen. Der Vollständigkeit halber sei noch darauf hingewiesen, dass der beschriebene Schalungseinbau auch von Hand ausgeführt werden kann, sollte sich die Schadstelle in einem begehbaren Rohr befinden.

## Patentansprüche

1. Vorrichtung zum ferngesteuerten Schalungseinbau in einer Rohrverzweigung
a) mit einem in eine Hauptleitung einfahrbaren Applikationsgerät (1);
b) mit einem an dem Applikationsgerät (1) angeordneten Schild (2), das an die Innenwand der Hauptleitung (10) anlegbar ist;
c) mit einem rohrförmig aufblasbaren Ballon (3), der aus dem Schild (2) in Richtung der Innenwand der Hauptleitung (10) herausragt und an einen Drucklufterzeuger anschließbar ist;
d) mit einer aufweitbaren Schalung (4), die über den Ballon (3) geschoben ist, um an der Rohrverzweigung in eine Einmündung (7) einer Nebenleitung (8) einfahrbar zu sein.

2. Vorrichtung nach Anspruch 1, dadurch gekennzeichnet, dass die Aussenfläche der aufweitbaren Schalung (4) mit Klebstoff (17) beschichtet ist.

3. Vorrichtung nach Anspruch 1 oder 2, dadurch gekennzeichnet, dass der Schild (2) der Krümmung der Innenwand der Hauptleitung entsprechend gekrümmt ist.

4. Vorrichtung nach einem der Ansprüche 1 bis 3, dadurch gekennzeichnet, dass der Schild (2) die Einmündung (7) der Nebenleitung (8) überragt.

5. Vorrichtung nach einem der Ansprüche 1 bis 4, dadurch gekennzeichnet, dass der Ballon (3) aus einem aufblasbaren Gummischlauchmaterial hergestellt ist.

6. Vorrichtung nach einem der Ansprüche 2 bis 5, dadurch gekennzeichnet, dass die Schalung (4) auf ihrer Länge durchgehend längsgeschlitzt und so zusammengedrückt ist, dass sich die aufgeschlitzten Wandteile (5) überlappen.

7. Vorrichtung nach einem der Ansprüche 2 bis 6, dadurch gekennzeichnet, dass die Schalung (4) eine verlorene Schalung ist.

8. Vorrichtung nach einem der Ansprüche 1 bis 7, dadurch gekennzeichnet, dass das Applikationsgerät (1) mit einer Spritzdüse, z.B. einer Hochdruckspritzdüse, ausgerüstet ist, um den Zwischenraum zwischen der Schalung (4) und beschädigten Rohrstellen an der Einmündung (7) mit einer Dichtungsmasse abzudichten.

9. Vorrichtung nach einem der Ansprüche 1 bis 8, dadurch gekennzeichnet, dass das Applikationsgerät (1) an eine Fernsteuerungsanlage angeschlossen ist.

10. Vorrichtung nach Anspruch 9, dadurch gekennzeichnet, dass die Fernsteuerungsanlage sich an einer Rohrsanierungsmaschine befindet.

11. Vorrichtung nach einem der Ansprüche 2 bis 10, dadurch gekennzeichnet, dass die Schalung aus einem federnden Material hergestellt ist.

12. Verfahren zum ferngesteuerten Sanieren einer beschädigten Stelle an einer Einmündung von Rohrverzweigungen an einer Hauptleitung mit den folgenden Schritten:
a) ein Applikationsgerät (1), insbesondere nach einem der Patentansprüche 1 bis 12, wird in die Hauptleitung eingefahren;
b) eine über einen aufblasbaren Ballon (3) aufgeschobene, aufweitbare Schalung (4) an dem Applikationsgerät wird in die Rohrverzweigung geschoben;
c) beim Einschieben der Schalung (4) mit dem Ballon (3) wird ein Schild (2), aus welchem die Schalung (4) sowie der Ballon (3) herausragen, um den Mündungsbereich der Rohrverzweigung herum an die Innenwandung der Hauptleitung (10) angesetzt;
d) der Ballon (3) wird mit Druck beaufschlagt, die Schaltung (4) wird aufgeweitet und wird an die Innenwand der Nebenleitung (8) der Rohrverzweigung angepreßt;
e) ein Zwischenraum (12), der sich zwischen der Schalung und der beschädigten Stelle bzw. dem Schild (2) und der beschädigten Stelle ergibt, wird mit einer Dichtungsmasse (16) ausgefüllt.

13. Verfahren nach Anspruch 12, dadurch gekennzeichnet, dass die aufweitbare Schalung ein längsgeschlitztes Rohr ist, welches so zusammengedrückt und dadurch vorgefedert wird, dass sich die aufgeschlitzten Wandteile überlappen.

14. Verfahren nach Anspruch 13, dadurch gekennzeichnet, dass das längsgeschlitzte Rohr auf einen Durchmesser zusammengedrückt und dadurch vorgefedert wird, der kleiner als ein Innendurchmesser der Nebenleitung ist.

15. Verfahren nach Anspruch 14, dadurch gekennzeichnet, dass das Rohr durch einen Draht zusammengedrückt wird, welcher unter dem Ausdehnungsdruck der Schalung auf Grund des Aufblasens des Ballons zerrissen wird.

16. Verfahren nach einem der Ansprüche 12 bis 15, dadurch gekennzeichnet, dass der Ballon mit der Schalung so weit in die Nebenleitung eingefahren wird, dass der Schild an die Innenwand der Hauptleitung angelegt wird.

17. Verfahren nach einem der Ansprüche 12 bis 16, dadurch gekennzeichnet, dass auf die Aussenseite der Schalung vor dem Einfahren derselben in die Nebenleitung ein Klebstoff aufgebracht wird.

18. Verfahren nach einem der Ansprüche 12 bis 17, dadurch gekennzeichnet, dass die Schalung durch ansteigenden Druck im Ballon an die Innenwand der Nebenleitung angepresst wird.

19. Verfahren nach einem der Ansprüche 12 bis 18, dadurch gekennzeichnet, dass das Einfahren des Applikationsgerätes in die Hauptleitung und Einschieben desselben in die Einmündung der Nebenleitung sowie das Aufblasen des Ballons und das anschliessende Ausfüllen des Zwischenraumes mit der Dichtungsmasse durch eine Steuereinrichtung ferngesteuert wird.

20. Verfahren nach Anspruch 19, dadurch gekennzeichnet, dass die Steueranlage mittels einer die Vorgänge an der Rohrverzweigung überwachenden Fernkamera gesteuert wird.

21. Verfahren nach einem der Ansprüche 12 bis 20, dadurch gekennzeichnet, dass das Applikationsgerät an die unbegehbare Rohrverzweigung herangebracht wird.

22. Verfahren nach einem der Ansprüche 12 bis 21, dadurch gekennzeichnet, dass das Applikationsgerät in die Hauptleitung einer Abwasserleitung eingefahren wird.

## Claims

1. Device for the remote controlled installation of sheathing in a manifold
a) with an application device (1), which can be inserted into the main pipe;
b) with a screen (2) mounted on the application device (1), which can be applied to the inner wall of the main pipe (10);
c) with a balloon, which can be inflated in tubular form (3), which protrudes from the screen (2) in the direction of the inner wall of the main pipe (10) and which can be connected to a compressed air generator;
d) with an expandable sheathing (4), which is slid over the balloon (3), in order to be able to be inserted into an inlet (7) in a subsidiary pipe (8) at the manifold.

2. Device according to claim 1, wherein said sheathing (4) has its outer surface coated in an adhesive agent (17).

3. Device according to claim 1 or 2, wherein said screen (2) is bent according to the angle of the internal wall of the main sewer.

4. Device according to claims 1 to 3, wherein said screen (2) protrudes across the outlet/inlet (7) of the secondary sewer pipe (8).

5. Device according to one of the claims 1 to 4, wherein said balloon (3) is manufactured of an inflatable rubber hose material.

6. Device according to one of the claims 2 to 5, wherein the sheathing (4) is slit along its entire length and is compressed in such a way that the slit parts of the wall (5) overlap.

7. Device according to one of the claims 2 to 6, wherein the sheathing (4) is a lost sheathing.

8. Device according to one of the claims 1 to 7, wherein the application device (1) is fitted with a nozzle, e.g. a high-pressure nozzle, in order to seal the cavity between the sheathing (4) and the damaged parts of the pipe at the junction by means of a sealing mass.

9. Device according to one of the claims 1 to 8, wherein the application device (1) is connected to a remote-control device.

10. Device according to claim 9, wherein the remote-control device is on a pipe-repairing machine.

11. Device according to one of the claims 2 to 10, wherein the sheathing is produced from an elastic material.

12. Method for the remote controlled rehabilitation of a damaged section at an inlet of manifolds on a main pipe with the following stages:
a) an application device (1), in particular according to one of the claims 1 to 11, is inserted into the main pipe;
b) an expandable sheathing (4) slid over an inflatable balloon (3) on the application device is inserted into the manifold;
c) when inserting the sheathing (4) with the balloon (3), a screen (2), from which both the sheathing (4) as well as the balloon (3) protrude, is applied to the inner wall of the main pipe (10) around the junction area of the manifold;
d) pressure is applied to the balloon, the sheathing (4) is expanded and is pressed against the inner wall of the subsidiary pipe (8) in the manifold;
e) any cavity (12), which is produced between the sheathing and the damaged section, resp., the screen (2) and the damaged section, is filled with a sealing mass (16).

13. Method according to claim 12, wherein the expandable sheathing is a longitudinally slit pipe which is compressed and pre-stressed in such a way that the slit parts of the wall overlap.

14. Method according to claim 13, wherein the longitudinally slit pipe is compressed to a diameter which is smaller than an internal diameter of the subsidiary pipe and is pre-stressed in this way.

15. Method according to claim 14, wherein the pipe is compressed by a wire, which ruptures under the pressure of the expansion as a result of the inflation of the balloon.

16. Method according to one of the claims 12 to 15, wherein the balloon with the sheathing is inserted into the subsidiary pipe to such a distance that the screen makes contact with the internal wall of the main pipe.

17. Method according to one of the claims 12 to 16, wherein an adhesive agent is applied to the outside of the sheathing before the latter is inserted into the subsidiary pipe.

18. Method according to one of the claims 12 to 17, wherein the sheathing is pressed onto the internal wall of the subsidiary pipe as a result of the increasing pressure in the balloon.

19. Method according to one of the claims 12 to 18, wherein the insertion of the application device into the main pipe and the pushing of the same into the junction of the subsidiary pipe and the inflation of the balloon and the subsquent filling of the cavitiy with the filling mass are controlled by a remote-control device.

20. Method according to claim 19, wherein the control unit is steered by a video camera supervising the processes at the manifold.

21. Method according to one of the claims 12 to 20, wherein the application device is brought closer to the inaccessible manifold.

22. Method according to one of the claims 12 to 21, wherein the application device is inserted into the main pipe of a sewer pipe.

## Revendications

1. Dispositif de montage télécommandé de coffrage dans un raccord de tuyauterie
a) avec un applicateur introduit dans une conduite principale (1);
b) avec une plaque (2) montée sur l'applicateur (1) et applicable sur la paroi intérieure de la conduite principale (10);
c) avec un ballon gonflable tubulaire (3) dépassant de la paroi intérieure de la conduite principale (10) et pouvant être raccordé à un compresseur;
d) avec un coffrage extensible (4) pouvant être poussé au-dessus du ballon (3) afin d'être introduit, au niveau du raccord de tuyauterie, dans une embouchure (7) d'une conduite auxiliaire (8).

2. Dispositif selon revendication 1 caractérisé par le fait que la plaque (2) du coude de la paroi intérieure de la conduite principale est coudée en conséquence.

3. Dispositif selon revendication 1 ou 2 caractérisé par le fait que la plaque (2) du coude de la paroi intérieure de la conduite principale est coudée en conséquence.

4. Dispositif selon une des revendications 1 a 3 caractérisé par le fait que la plaque (2) dépasse de l'embouchure (7) de la conduite auxiliaire (8).

5. Dispositif selon une des revendications 1 à 4 caractérisé par le fait que le ballon (3) est fabriqué dans la même matière qu'un tuyau de caoutchouc gonflable.

6. Dispositif selon une des revendications 2 à 5 caractérisé par le fait que le coffrage (4) fendu sur toute sa longueur est pressé de sorte que les parties (5) séparées par la fente se recouvrent.

7. Dispositif selon une des revendications 2 à 6 caractérisé par le fait que le coffrage (4) est un coffrage perdu.

8. Dispositif selon une des revendications 2 à 6 caractérisé par le fait que l'applicateur (1) est équipé d'un injecteur, p. ex. un injecteur à haute pression, assurant l'étanchéité de l'espace séparant le coffrage (4) et les parties endommagées du tuyau au niveau de l'embouchure (7) grâce à une pâte d'étanchéité.

9. Dispositif selon une des revendications 1 à 8 caractérisé par le fait que l'applicateur (1) est raccordé à une installation de télécommande.

10. Dispositif selon la revendication 9 caractérisé par le fait que l'installation de télécommande est située sur une machine d'assainissement de tuyauteries.

11. Dispositif selon une des revendications 2 à 10 caractérisé par le fait que le coffrage est fabriqué en une matière élastique.

12. Procédé d'assainissement télécommandé d'une embouchure endommagée sur des raccords de tuyauterie d'une conduite principale et composé des phases suivantes:
a) un applicateur (1), surtout selon une des revendications 1 à 12, est introduit dans la conduite principale;
b) un coffrage extensible (4) poussé par-dessus un ballon gonflable (3) sur l'applicateur (1) est introduit dans le raccord de tuyauterie;
c) lors de l'introduction du coffrage (4) avec le ballon (3); une plaque (2), d'où dépassent le coffrage (4) et le ballon (3), est placée afin sur la paroi intérieure de la conduite principale (10) tout autour de l'embouchure du raccord de tuyauterie;
d) le ballon (3) est gonflé à l'air comprimé, le coffrage (4) s'étend et est ainsi pressé sur la paroi intérieure de la conduite auxiliaire (8) du raccord de tuyauterie;
e) un espace intermédiaire (12), qui se forme soit entre le coffrage et l'endroit endommagé soit entre la plaque (2) et l'endroit endommagé, est rempli à l'aide d'une pâte d'étanchéité (16).

13. Procédé selon la revendication 12 caractérisé par le fait que le coffrage extensible est constitué par un tube fendu pressé et prétendu de telle sorte que les deux parties séparées par la fente se recouvrent.

14. Procédé selon la revendication 13 caractérisé par le fait que le tube fendu en long est pressé et prétendu sur un diamètre inférieur au diamètre intérieur de la conduite auxiliaire.

15. Procédé selon la revendication 14 caractérisé par le fait que le tube est pressé par un fil qui se rompt sous la pression d'extension du coffrage en raison du gonflage du ballon.

16. Procédé selon une des revendications 12 à 15 caractérisé par le fait que le ballon avec le coffrage est introduit à une telle profondeur dans la conduite auxiliaire que la plaque est pressée contre la paroi intérieure de la conduite principale.

17. Procédé selon une des revendications 12 à 16 caractérisé par le fait qu'une colle est appliquée sur la paroi extérieure du coffrage avant son introduction dans la conduite auxiliaire.

18. Procédé selon une des revendications 12 à 17 caractérisé par le fait que le coffrage est pressé sur la paroi intérieure de la conduite auxiliaire sous l'effet de la pression croissante dans le ballon.

19. Procédé selon une des revendications 12 à 18 caractérisé par la télécommande qui, par un dispositif de commande, dirige l'introduction de l'applicateur dans la conduite principale et son placement dans l'embouchure de la conduite auxiliaire ainsi que le gonflement du ballon et le remplissage suivant de l'espace intermédiaire grâce à la pâte d'étanchéité

20. Procédé selon la revendication 19 caractérisé par le fait que le dispositif de commande est dirigé par une caméra surveillant les opérations en cours sur le raccord de tuyauterie.

21. Procédé selon une des revendications 12 à 20 caractérisé par le fait que l'applicateur est placé jusque sur le raccord de tuyauterie qui ne peut être atteint.

22. Procédé selon une des revendications 12 à 21 caracterisé par le fait que l'applicateur est introduit dans la conduite principale d'une canalisation d'eaux usées.
